# EUROPEAN PATENT APPLICATION

(11) **EP 1 426 104 A1**
(43) Date of publication of application: **09.06.2004**
(21) Application number: 02762969.0
(22) Date of filing: 02.09.2002
(51) Int. Cl.: B01J 20/00, B01D 39/00, C02F 1/28

(54) **COMPOSITE PARTICULATE ARTICLE AND METHOD FOR PREPARATION THEREOF**

(30) Priority: 10.09.2001 JP 2001273217
(71) Applicant: Kuraray Chemical Co., Ltd, Bizen-shi, Okayama 705-0025 (JP)
(72) Inventor: TAJIMA, Yasuhiro c/o Kuraray Chemical Co., Ltd., Bizen-shi, Okayama 705-0025 (JP); FUKUNISHI,Yoshiharu c/o Kuraray Chemical Co.,Ltd., Osaka-shi, Osaka 530-00 27 (JP); OTSUKA, Kiyoto c/o Kuraray Chemical Co., Ltd., Bizen-shi, Okayama 705-0025 (JP)
(74) Representative: Müller-Boré & Partner Patentanwälte
(86) International application number: PCT/JP2002/008893
(87) International publication number: WO 2003/022425

(57) **Abstract**

A composite particulate article which comprises a particulate article and, carried thereon, a fine particulate compound entangled in a fibrillated fiber; amethod for preparing the composite particulate article; a gas clarifying material comprising the composite particulate article; a water clarifying material comprising the composite particulate article; and awater clarifying device using the water clarifying material. The composite particulate article exhibits a reduced resistance to the passing of a gas or a liquid through it, without detriment to the performance capabilities inherent in the particulate article, and also satisfactorily exerts the specific performance capabilities of the fine particulate compound with respect to adsorption or a catalytic reaction.

## Description

### Technical Field

The present invention relates to a composite particulate article and a method for preparing it. More particularly, the present invention relates to a composite particulate article, a method for preparation thereof, a gas clarifying material comprising the composite particulate article, a water clarifying material comprising the composite particulate article, and awater clarifying device using the water clarifying material. Since the composite particulate article of the present invention can adsorb and remove malodorous gas or noxious gas in a well-balanced manner, this article is suitable as a gas clarifying material for use in air cleaning, etc., and, since this article is excellent in adsorptivity to adsorb total trihalomethanes, free chlorine, heavy metals, etc., so that they can be adsorbed and removed in a well-balanced manner, this article is suitable also as a water clarifying material used to clarify water.

### Background Art

Activated carbon is excellent in adsorbability to absorb various contaminants and malodorous/harmful substances, and has been conventionally used as an adsorbent material in various fields regardless of domestic or industrial purposes. In recent years, delicious water having neither a chlorine odor nor a musty odor has been demanded to clarify water, and, so far, various types of water clarifying devices have been proposed in response to this demand. However, recently, safety and hygienic concerns have also increased with regard to water quality that has been affected by total trihalomethanes, endocrinedisrupters, heavymetals, etc. , and it is insufficient to meet demand only with the activated carbon. Therefore, activated carbon is required to be used together with other adsorbent materials, such as inorganic compounds that have specific adsorbabilities.

In the field of water clarification, the Environment Agency regards heavy metals, especially lead ions, as suspected substances that constitute endocrine disrupters. Accordingly, it is of urgent necessity to develop an effective water clarifying material, considering that the lead ion concentration contained in drinking water is to be restricted from 50ppb or less, which is the current regulatory value, to 10ppb or less in 2003.

As a water clarifying material excellent in capabilities to remove free chlorine, mustiness, total trihalomethanes (THM), and heavy metals in drinking water, the present applicant has developed an activated-carbon structure formed with a compound consisting of a fibrous activated carbon, titanium dioxide, silicon dioxide, and a binder, and has filed a patent application the number of which is Japanese Patent Application No. H11-62466 (Japanese Unexamined Patent Publication No. 2000-256999).

However, a water passing test using this activated-carbon structure has shown excellent capability of removing free chlorine, THM, and heavy metals is exhibited in the initial stage of water passing, but the removal rate of these, especially of THM, is liable to fall as the accumulated amount of water passing therethrough becomes larger. Therefore, the activated-carbon structure has not necessarily been satisfactory because of a decrease in the THM removal rate when it is used over a long period of time. In order to satisfy safety and hygienic demands concerning water quality as mentioned above, it is necessary to further increase the capability of adsorbing THM while maintaining the capability of removing free chlorine and heavy metals.

On the other hand, for the purpose of air clarification, demand has risen for removal of malodorous and noxious gases generated from cigarettes, aldehydes that cause sick house syndrome, composite malodorous gases generated from sewage disposal and human waste, and putrid odors or malodorous gases generated from foods. However, there are many cases in which these gases cannot be treated only by activated carbon, and therefore a study has been made of using other adsorbent materials, such as inorganic compounds that have unique adsorbability, together with the activated carbon or using an adsorbent material that carries a catalyst component.

Although there are known various adsorbent materials or catalyst components that have unique adsorbability and that can remove harmful substances or malodorous gases which cannot be satisfactorily removed only by the activated carbon, it will take further ingenuity to use these together with a particulate activated carbon. First, these unique adsorbent materials or catalyst components are often insoluble in a solvent like water, and a method of spraying an aqueous solution, for example, from a spray nozzle and drying them cannot be employed when they are carried on the particulate activated carbon. Second, a method of carrying them through some type of binder component has a drawback in that the binder component closes a part of the pores of the activated carbon, thus hindering a part of the adsorbability inherent in the activated carbon.

Another drawback is that these unique adsorbent materials or catalyst components are finelyparticulate ones inmost cases, and require careful handling. The fact that they are finely particulate creates the advantage of having a large contact area with substances to be adsorbed, but, because of this fact, they bring about ill effects, such as the occurrence of clogging or a rise in internal resistance, when they are commercialized as filters, or the like, without being modified. Still another drawback is that the fine particles easily flow outward when a gas or a liquid is passed through them at high speed.

For example, Japanese Unexamined Patent Publication No. H8-132026 proposes use of an alumino-silica inorganic ion exchanger in order to remove heavy metals, such as lead. However, its particle diameter has been limited to 100 to 500µm in order to avoid an increase in pressure drop, and the space velocity (SV) of the water passing has been required to be 300hr⁻¹ or less.

Additionally, Japanese Kohyo No. H6-504714 discloses the use of an amorphous titanosilicate in order to similarly remove lead, in which the amorphous titanosilicate whose particle diameter is 20 to 60 mesh (250 to 840µm) is filled up and used without being modified. However, a compact water-clarifying device that follows the present trend cannot be realized if a particulate article having this particle size is used without making inventive modifications thereto.

It is therefore an object of the present invention to provide a particulate article, a method f or preparation thereof, a gas clarifying material, a water clarifying material, and a water clarifying device that are capable of, when a container is filled with insoluble fine particles, which are the aforementioned unique adsorbent materials or catalyst components, and with the particulate article without detriment to the performance capabilities inherent in the particulate article, exhibiting a reduced resistance to the passing of a gas or a liquid (hereinafter, "resistance to the passing of a gas or a liquid" is often referred to simply as "resistance") through it, and also satisfactorily exerting the specific performance capabilities thereof with respect to adsorption or a catalytic reaction.

### Disclosure of Invention

In order to achieve the object, the present inventors have diligently made repeated examinations, and, as a result, have unexpectedly found that the aforementioned object can be achieved by a thoroughly new carrying method of entangling a fine particulate compound in a fibrillated fiber, thus reaching the present invention. That is, the present invention is a composite particulate article that carries a fine particulate compound entangled in a fibrillated fiber on a particulate article.

Another invention of the present invention is a method for preparing a composite particulate article formed by preparing a solid-liquid mixed solution while dispersing the fibrillated fiber and the fine particulate compound into a solvent, mixing a particulate article with the solid-liquid mixed solution, then filtering out the solid, removing surface water of the solid, newly adding a dry particulate article to the solid, and mixing and drying them together.

Another invention of the present invention is a gas clarifying material comprising the composite particulate article, and is a water clarifying material comprising the composite particulate article. Still another invention of the present invention is a water clarifying device using this water clarifying material.

The most significant feature of the present invention is the fact that the fibrillated fiber is used to prepare the composite particulate article. When a container is filled with the thus structured composite particulate article and is used, the composite particulate article exhibits a reduced resistance, and also satisfactorily exerts the specific performance capabilities thereof with respect to adsorption or a catalytic reaction. Although this reason cannot be necessarily clearly described, a possible assumption is as follows. That is, the composite particulate article of the present invention is one that carries a fibrillated fiber in which a fine particulate compound is entangled on a particulate article, and, presumably, immense existing pores inherent in the particulate article effectively work without being crushed as a result of employment of this unique carrying method.

Presumably, according to this mechanism, the specific performance capabilities of the fine particulate compound can be given to the particulate article without detriment to the adsorptivity of the particulate article, and contact efficiency with substances to be adsorbed can be increased by mixing the fibrillated fiber in which the fine particulate compound is entangled with the particulate article in a wide area and uniformly while preventing a rise in resistance, thereby making it possible to realize a composite particulate article that has a high removability as well as low pressure drop.

### Brief Description of Drawings

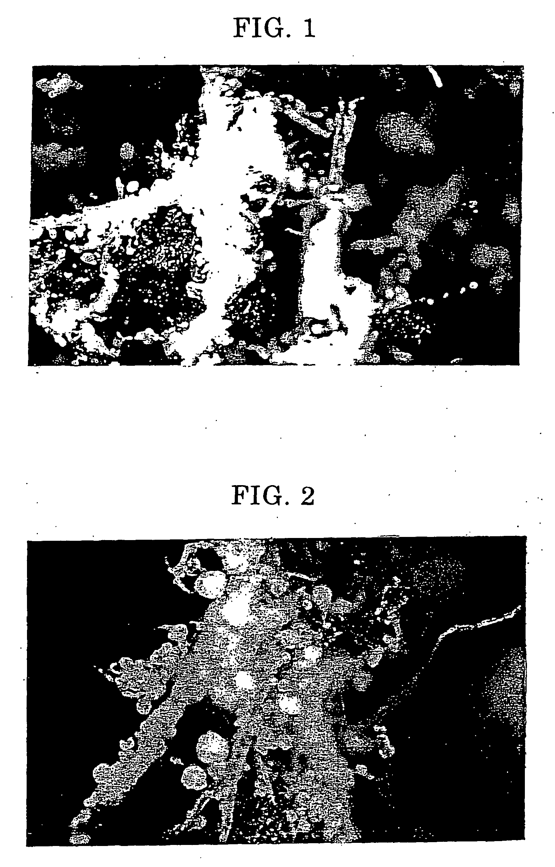

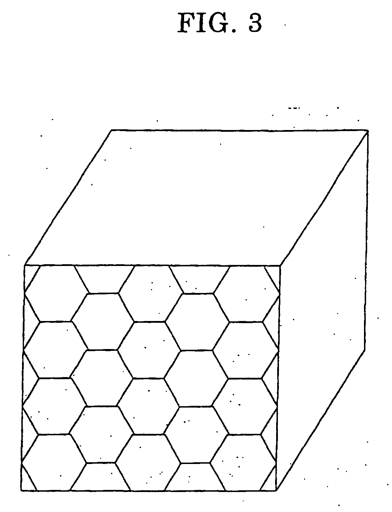

Fig. 1 is an electron microscope photograph (×150) of a composite particulate article obtained by Example 1, Fig. 2 is an electron microscope photograph (×300) showing a state where a fine particulate compound is entangled in fibrillated fibers, and Fig. 3 is a schematic drawing showing one example of a honeycomb-structured container.

### Best Mode for Carrying Out the Invention

Known particulate articles, such as activated carbon, alumina, silica-alumina, silica, and zeolite, can be mentioned as particulate articles used in the present invention. The shape of the particulate article is not limited to a specific one, and a clastic particulate article whose average particle diameter is approximately 75µm to 5mm is practical and preferable.

Under the condition that fibrillated fibers used in the present invention can be fibrillated according to a known conventional method, they can be widely used regardless of synthetic materials or natural materials. For example, acrylic fibers, polyethylene fibers, polyacrylonitrile fibers, cellulose fibers, and aramid fibers can be mentioned as such fibrillated fibers.

The fibrillated fiber serves as an important factor that controls whether or not a composite adsorbent material to be obtained exerts performance capabilities by which harmful substances, malodorous gases, etc., can be adsorbed and removed in a well-balanced manner. Therefore, a preferred fibrillated fiber is to have a cohesive force for carrying a fine particulate compound and to serve so as not to bring about an entire massive piece. From this viewpoint, a micro-fibrillated fiber having a fiber diameter smaller than several microns, preferably smaller than 3µm, is preferable as the fibrillated fiber.

The micro-fibrillated fiber can be obtained by processing the aforementioned fibers with a beater or a refiner. It is preferable to use a fibrillated fiber whose fiber length is 4mm or less, in order to have a cohesive force necessary to carry the fine particulate compound and in order not to bring about a composite particulate article that has been dried into a massive article. Especially, a micro-fibrillated fiber comprising an acrylic fiber is preferable.

Additionally, it is permissible to include other fibers like ion-exchange fibers that have ion-exchange groups or chelate groups under the condition that the effect of the present invention is not obstructed.

A fine particulate compound that has an ion-exchange function capable of adsorbing resolvable heavy metals and that is preferably used for water clarification can be mentioned as the fine particulate compound used in the present invention. The fine particulate compound having the ion-exchange function is a compound that can emit ions into a salt aqueous solution while being in contact with the solution and can take the ions in the solution into the inside.

Aluminosilicate typified by zeolite, titanosilicate, hydroxyapatite, bone charcoal, ion-exchange resin, etc., can be mentioned as concrete examples of the fine particulate compound. Among them, aluminosilicate or a titanosilicate-based inorganic compound, which has a large ion-exchange capacity and has high selectivity with respect to heavy metals, is preferable, and, specifically, the titanosilicate-based inorganic compound is preferable.

Preferably, the fine particulate compound is shaped like a sphere whose particle diameter is 200µm or less, preferably 3µm to 90µm, from the viewpoint of a carrying capability. The fine particulate compound may be powdery or granular. When an aluminosilicate-based zeolite is used, A-type or X-type zeolite is preferable because of its large ion-exchange capacity, and it is efficient to use amorphous titanosilicate being marketed under the trade name of ATS from Engelhard Corporation, for example, as the titanosilicate-based inorganic compound.

Next, examples of materials used for air clarification will be mentioned. First, a zeolite that has high hydrophobic properties and whose silica/alumina weight ratio exceeds five is excellent in its capability to adsorb ammonia or acetaldehyde. A hydrophobic zeolite being marketed under the trade name of Smellite or Absents from UOP Corporation can be mentioned as this zeolite. Additionally, a composite metallic oxide being marketed under the trade name of Shoeklenz from RASA Industries, LTD. can be mentioned as an example of an inorganic fine particulate compound excellent in its capability to adsorb aldehydes or ammonia.

Additionally, particulate-article-carrying catalysts using a large surface area of a particulate article can be used for the purpose of gas clarification and water clarification. Since these catalyst components are chiefly insoluble metals or metallic compounds, the present invention can be applied as a method for carrying these catalyst components on a particulate article carrier. That is, fine particles of these metals or metallic compounds can be carried in the vicinity of the particulate article by entangling them in fibrillated fibers, and can be used as catalysts for an oxidation reaction or a hydration reaction.

Activated carbon is preferable as the particulate article because it is excellent in its capability to adsorb various substances. The activated carbon should be formed by activating carbonaceous materials, and, preferably, has a specific surface area greater than 100s m²/g.

Plants such as coconuts shells, palms, fruit shells, sawdust, eucalyptus, pines, coals, petroleum cokes, pitch carbide manufactured from these materials, phenolic resin, etc., can be mentioned as examples of the carbonaceous materials. It is preferable to use the coconuts shells activated carbon among them. The size of the particulate activated carbon can be selected in accordance with the purpose of use, and is preferably 75µm to 1.7mm (200 mesh to 10 mesh), more preferably 100µm to 1.4mm, from the viewpoint of workability, contact efficiency with water, or resistance to water passing when it is used for water clarification.

To manufacture the composite particulate article of the present invention, fibrillated fibers and a fine particulate compound are first dispersed into a solvent so as to prepare a solid-liquid mixture. A dispersing agent, such as carboxymethyl cellulose, can be used together on condition that the effect of the present invention is not obstructed. Although various organic compounds, water, mixtures of these, etc., can be used as the solvent, water is safe and preferable. The fibrillated fibers and the fine particulate compound are compounded at a ratio of 1 to 20 parts by weight, preferably 5 to 10 parts by weight, of the fine particulate compound to 1 part by weight of the fibrillated fibers, but specific limitations are not imposed thereon as long as the fibrillated fibers and the fine particulate compound mixed in the solvent can be prepared in the solvent.

Thereafter, a particulate article is introduced to the solid-liquid mixture, they are then mixed equally, the solid is then filtered out therefrom, and the surface water of the solid is removed. A method efficient in removing the surface water is centrifugal dehydration. After removing the surface water, a dry particulate article is newly added to the solid, and they are mixed and dried. Thereby, dehydration efficiency is raised, and the fine particulate compound can be prevented from falling off from the composite particulate article, and, preferably, the yield thereof improves 2 to 10 times. The amount of particulate articles to be added is appropriately determined depending on the balance between the dehydrating effect and the adsorbing function.

From the viewpoint of balance control with respect to performance capabilities inherent in the particulate article, the fine particulate compound to be carried on the particulate article is preferably 0.1 to 30 wt%, more preferably 1.5 to 10 wt%. The fibrillated fiber is preferably 10 to 20 wt% of the fine particulate compound. Lastly, the solid is dried so as to be the composite particulate article of the present invention. It is preferable to dry it while being stirred, because the solid can be prevented from becoming massive. Although specific limitations are not imposed on the drying condition, it is impractical to dry it at very high temperatures and for extended periods of time, and, since it is preferable to thermally join a part of the fibrillated fibers to the particulate article, the solid is dried at 100 to 150°C for 2 to 24 hours. The drying performed with this attention to the above point makes it possible to prevent the composite particulate article from being massive. Fig. 1 is an electron microscope photograph (×150) of the composite particulate article of the present invention, and Fig. 2 is an electron microscope photograph (×300) showing a state where the fine particulate compound is entangled in the fibrillated fibers like bunches of grapes.

The resulting composite particulate article can be used as an air clarifying filter to clarify air including malodorous gases, such as aldehyde, ammonia, and amine, or as a gas clarifying material to clarify industrial exhaust gases including noxious malodorous gases, such as mercaptan, for various gas clarifiers in the form of, for example, an unwoven cloth directly filled with the article or in the form of the space in a honeycomb-structured or corrugated base material filled with the article. Fig. 3 is one example of a honeycomb-structured container having a honeycomb structure 50mm in length, 50mm in width, and 10mm in depth.

Preferably, the resulting composite particulate article is further formed into a cartridge serving as a water clarifying material, with which a water clarifying device is filled, so as to clarify drinking water or the like. Since the composite particulate article of the present invention is particulate, automatic filling can be performed. Since the adsorptivity and the resistance to the water passing conflict with each other when the composite particulate article is used for the water clarifying device, the filling density thereof is preferably 0.40 to 0. 60g/mL from the viewpoint of the balance therebetween. The filling density in the present invention means the weight of the particulate article for each unit volume when the particulate article is poured with 100 milliliters for 50 to 100 seconds into a 100ml graduated cylinder.

Although specific limitations are not imposed on the water passing condition when the article is used as a water clarifying device, the condition is established so that the pressure drop does not become very large according to SV of 500 to 2000hr⁻¹, for example. The water clarifying device may be used by being filled with only the composite particulate article of the present invention, or may be used by being filled with a combination of known adsorbent materials, ceramic filtering materials, hollow fiber membranes, etc., with the composite particulate article.

The present invention will hereinafter be described in detail based on examples, for which the present invention is not limited. It is to be noted that "CSF" mentioned in the examples is a numerical value that shows the degree of beating of fibers and that is fixed by Canadian Standard Freeness.

### Example 1

1g of commercially-available acrylic fibers (A104 manufactured by Asahi Kasei Corp.) beaten to CSF=50mL with a refiner was used as the micro-fibrillated fiber, and these acrylic fibers and 8g of titanosilicate lead-removing materials (ATS manufactured by Engelhard Corporation, mean particle diameter 30µm, spherical) used as the fine particulate compound were dispersed into 300g of water so as to prepare a slurry-like solid-liquid mixed aqueous solution.

92g of particulate activated carbon [KURARAY COAL GW60/150 manufactured by Kuraray Chemical Co. , Ltd. (particle diameter: 0.1mm to 0.25mm, specific surface area: 800m²/g)] was put into the slurry-like aqueous solution, they were then stirred evenly, the solid was then filtered out, the solid was further subjected to centrifugal dehydration by use of a filter cloth, and the surface water thereof was removed. 100g of the same activated carbon GW60/150 as mentioned above that had been dried was newly added, they were then mixed, and they were dried at 135° C for 8 hours, whereby a composite particulate article was obtained. When the composite particulate article was observed through an electron microscope, ATS was entangled in the fibrillation acrylic fibers like bunches of grapes and was carried on the surface of the activated carbon. This state is shown in Fig. 1 and Fig. 2 (whose magnifications are 150 and 300, respectively). The white part of Fig. 1 shows a state where ATS is entangled in the fibrillation acrylic fibers like bunches of grapes, and, from this, it is understood that ATS is carried on the activated carbon while being entangled in the fibrillation acrylic fibers like bunches of grapes. Fig. 2 is a view further magnifying the state where ATS is entangled in the fibrillation acrylic fibers like bunches of grapes. 3.2% was a result obtained by measuring the ignition residue of the composite particulate article according to the method prescribed in JISK1474.

45ppb of chloroform, 30ppb of bromodichloromethane, 20ppb of dibromochloromethane, and 5ppb of bromoform were added to tapwater, preparations were then made to allow the concentration of the total of THM to be approximately 100ppb, and preparations were made to allow the ion concentration of lead to be 50ppb by further adding lead nitrate, whereby raw water was made. A 60mL-container (40mm in diameter × 48mm in length) was filled with a composite particulate article whose filling density is 0.46g/mL, whereby a water clarifying device was made, and the aforementioned raw water was passed at the rate of 1. 0L/minute. Since it is experientially known that the removal of THM brings about the removal of free chlorine, experiments were made on the condition that tap water mixed with THM and lead ions is used as raw water.

Under the condition that the point where concentrations in the water at outlets reaches 20% of concentrations at inlets, respectively, is regarded as a breakpoint, the lead removing capability was 28L/cc (activated carbon), and the THM removing capability was 13L/cc (activated carbon), each capability being represented as the amount of passing water needed to reach the breakpoint for each unit volume of the composite adsorbent.

### Example 2

Except that ventilation drying was performed at 120°C for 16 hours without newly adding activated carbon after the completion of centrifugal dehydration, a composite particulate article was made in the same way as in Example 1. The yield was half of that in Example 1. A water clarifying device was made by filling the same container as in Example 1 with this composite particulate article whose filling density is 0.41g/mL, and the same experiments as in Example 1 were made, and, as a result, the lead removing capability was 55L/cc (activated carbon), and the THM removing capability was 10L/cc (activated carbon). The ignition residue of the composite particulate article was 6.1%.

### Example 3

200g of commercially-available acrylic fibers (R56D manufactured by Japan Exlan Co. , Ltd.) beaten to CSF=50mL with a refiner were used as the micro-fibrillated fiber, and these acrylic fibers and 1500g of titanosilicate (ATS manufactured by Engelhard Corporation, mean particle diameter 30µm, spherical) used as the fine particulate compound were dispersed into 45L of water so as to prepare a slurry-like solid-liquid mixed aqueous solution.

15kg of particulate activated carbon [KURARAY COAL GW60/150 manufactured by Kuraray Chemical Co. , Ltd. (particle diameter: 0.1mm to 0.25mm, specific surface area: 800m²/g)] was put into the slurry-like aqueous solution, they were then stirred evenly, the solid was then filtered out, the solid was further subjected to centrifugal dehydration by use of a filter cloth, and the surface water thereof was removed. 15kg of the same activated carbon GW60/150 as mentioned above that had been dried was newly added, they were then mixed, and they were dried at 120° C for 12 hours, whereby a composite particulate article was obtained.

A water clarifying device was made by filling the same container as in Example 1 with this composite particulate article whose filling density is 0.50g/mL, and the same raw water as in Example 1 was passed at the rate of 1. 0 L/minute. As a result of measurement performed in the same way as in Example 1, the lead removing capability was 32L/cc (activated carbon), and the total trihalomethanes removing capability was 15L/cc (activated carbon).

### Example 4

360g of commercially-available acrylic fibers (A104 manufactured by Asahi Kasei Corp.) beaten to CSF=48mL with a refiner were used as the micro-fibrillated fiber, and these acrylic fibers and 2000g of A-type zeolite (ZEOSTAR NA100P manufactured by Nippon Chemical Industrial Co., Ltd., mean particle diameter: 3µm) used as the fine particulate compound were dispersed into 90L of water so as to prepare a slurry-like solid-liquid mixed aqueous solution.

30kg of particulate activated carbon GW48/100 manufactured by Kuraray Chemical Co. , Ltd. (particle diameter: 150 to 300µm, specific surface area: 800m²/g) was put into the slurry-like aqueous solution, they were then stirred evenly, the solid was then filtered out, the solid was further subjected to centrifugal dehydration by use of a filter cloth, and the surface water thereof was removed. 30kg of the same activated carbon GW48/100 as mentioned above that had been dried was newly added, they were then mixed, and they were dried at 120° C for 12 hours, whereby a composite particulate article was obtained. As a result of the measurement of lead/total trihalomethanes removabilities that had been performed in the same way as in Example 1, the lead removing capability was 27L/cc (activated carbon), and the total trihalomethanes removing capability was 12L/cc (activated carbon).

### Comparative Example 1

Hydroxyapatite was generated on the surface of 100g of the particulate activated carbon used in Example 1, whereby a composite particulate article was made. When the composite particulate article was observed through the electron microscope, a thin membrane of hydroxyapatite was generated as if to cover the surface of the activated carbon. A water clarifying device was made with a filling density of 0.52g/mL in the same way as in Example 1, and, as a result of the same experiment as in Example 1, the lead removing capability was 22L/cc (activated carbon), and the THM removing capability was 3L/cc (activated carbon).

### Comparative Example 2

A composite particulate article was made by use of titanosilicate in the same way as in Comparative Example 1. When this composite particulate article was observed through the electron microscope, the same phenomenon as in Comparative Example 1 appeared. A water clarifying device was made with a filling density of 0.53g/mL in the same way as in Example 1, and, as a result of the same experiment as in Example 1, the lead removing capability was 25L/cc (activated carbon), and the THM removing capability was 0L/cc (activated carbon).

### Comparative Example 3

Aramid fiber APYEIL A-1AW manufactured by Unitika Ltd. was beaten to CSF=70mL with a refiner, and this was used as a binder. Fibrous activated carbon obtained by cutting fibrous activated carbon (FR-15 manufactured by Kuraray Chemical Co., Ltd.) whose specific surface area was 1300m²/g and whose averaging fiber diameter was 15µm so as to be 3mm in length, the titanosilicate lead adsorbent material ATS used in Example 1, and a micro-fibrillated binder were mixed at the ratio of Fibrous activated carbon: ATS: Binder = 8:1:1 (weight ratio), and they were dispersed into water so as to have a solids concentration of 3 wt%, whereby a slurry was prepared.

A cylindrical container of 3cm in diameter × 6cm in length was made with a 200-mesh stainless steel wire net. The aforementioned slurry was put into this container, and was dried at 120° C, whereby a cylindrical structure was made. The filling density of this structure was 0.19g/mL. A water clarifying device was made by being filled with this structure. As a result of the measurement of adsorbabilities performed in the same way as in Example 1, the lead removing capability was 30L/cc (activated carbon), and the THM removing capability was 4L/cc (activated carbon).

### Comparative Example 4

A polyethylene fine powder was used as a binder, and 10g of polyethylene fine powder and 16g of the same titanosilicate lead adsorbent material ATS as in Example 1 were mixed evenly. 200g of the same particulate activated carbon as in Example 1 was put into this mixture, and they were mixed evenly, and, as a result, the whole of the surface of the activated carbon became uniform with white powder. This was heated to 120°C, and, after a polyethylene binder was completely melted therein, this was cooled to room temperature. After cooling, the compound was shaped into a mass, and it was difficult to return this mass to the original particle form with a small force.

This mass was crushed with a grinder, and was further riddled into 60 meshes and 150 meshes. A water clarifying device was made with a filling density of 0.43g/mL in the same way as in Example 1. As a result of experiments performed in the same way as in Example 1, the lead removing capability was 1L/cc (activated carbon), and the THM removing capability was 0L/cc (activated carbon).

### Comparative Example 5

30g of the particulate activated carbon used in Example 1 and 2g of commercially-available A-type zeolite (powdery synthetic zeolite A-4 manufactured by Wako Pure Chemical Industries, Ltd. , mean particle diameter: 3µm) were mixed, and experiments of the water passing including lead and total trihalomethanes were performed in the same way as in Example 1 while using the water clarifying device used in Example 1. As a result, turbid water flowed out from the beginning of the water passing, and the lead removing capability and the total trihalomethanes removing capability were both 10L/cc (activated carbon). When the weight and the value of an ignition residue were measured after the water was passed therethrough, it became clear that most of the synthetic zeolite had flowed out.

### Example 5

10g of commercially-available acrylic fibers (A104 manufactured by Asahi Kasei Corp.) beaten to CSF=49mL with a refiner were used as the micro-fibrillated fiber, and these acrylic fibers and 50g of commercially-available hydrophobic zeolite (Absents 1000 manufactured by UOP Corporation in the United States, meanparticle diameter: 3µm) usedas aparticulate adsorbent were dispersed into 3L of water so as to prepare a slurry-like solid-liquid mixed aqueous solution.

1kg of particulate activated carbon GW10/32 manufactured by Kuraray Chemical Co. , Ltd. (particle diameter: 0.5 to 1.7mm, specific surface area: 1000m²/g) was put into the slurry-like aqueous solution, this was then stirred evenly, the solid was then filtered out, the solid was further subjected to centrifugal dehydration by use of a filter cloth, and the surface water thereof was removed. Ventilation drying was then performed at 120° C for 12 hours, and a composite particulate article was made.

A rectangular container having a honeycomb structure of 50mm in length and width × 10mm in thickness as shown in Fig. 3 was filled with 10g of this composite particulate article. Herein, air including 50ppm of formaldehyde at 20° C was passed through at a rate of 10L/minute. When the formaldehyde concentration at the outlet was measured, the concentration was not more than 1ppm even after 12 hours from the beginning of the passing of the air. The result was satisfactory.

### Comparative Example 6

Except that the same container as in Example 1 was filled with only a mixture of 10g of the aforementioned particulate activated carbon GW10/32 and 0.5g of the aforementioned hydrophobic zeolite, experiments to remove gas including formaldehyde were performed in the same way as in Example 5. The concentration at the outlet exceeded 3ppm after 3 hours, and, when the container was opened, the hydrophobic zeolite and the activated carbon were partially separate from each other.

### Example 6

10g of commercially-available acrylic fibers (R56F manufactured by Japan Exlan Co., Ltd.) beaten to CSF=52mL with a refiner were used as the micro-fibrillated fiber, and these acrylic fibers and 30g of copper-oxide powder used as a particulate catalyst component were dispersed into 3L of water so as to prepare a slurry-like solid-liquid mixed aqueous solution.

1kg of particulate activated carbon GW32/60 manufactured by Kuraray Chemical Co., Ltd., (specific surface area: 1050m²/g) was put into the slurry-like aqueous solution, this was then stirred evenly, the solid was then filtered out, the solid was further subjected to centrifugal dehydration by use of a filter cloth, and the surface water thereof was removed. Ventilation drying was then performed at 120° C for 12 hours, and a composite particulate article was made. The same honeycomb base material as in Example 5 was filled with 10g of this composite particulate article. Herein, air including 50ppm of ammonia at 20°C was passed through at a rate of 10L/minute. When the ammonia concentration at the outlet was measured, the concentration was smaller than 1ppm even after 12 hours from the beginning of the passing of the air. The result was satisfactory.

### Example 7

3g of commercially-available acrylic fibers (A104) beaten to CSF=45mL with a refiner were used as the micro-fibrillated fiber, and these acrylic fibers and 5g of iron oxide powder used as a particulate catalyst component were dispersed into 1L of water so as to prepare a slurry-like solid-liquid mixed aqueous solution.

200g of alumina beads (Neo Bead manufactured by Mizusawa Industrial Chemicals, Ltd., mean particle diameter: 1mm) was put into the slurry-like aqueous solution, they were then stirred evenly, the solid was then filtered out, the solid was further subjected to centrifugal dehydration by use of a filter cloth, and the surface water thereof was removed. Ventilation drying was then performed at 120°C for 12 hours, and a composite particulate article was made. The same honeycomb base material as in Example 5 was filled with 10g of this composite particulate article. Herein, air including 10ppm of trimethylamine at 20° C was passed through at a rate of 10L/minute. When the trimethylamine concentration at the outlet was measured, the concentration was smaller than 0.3ppm even after 8 hours from the beginning of the passing of the air. The result was satisfactory.

### Example 8

3g of commercially-available acrylic fibers (A104) beaten to CSF=45mL with a refiner were used as the micro-fibrillated fiber, and these acrylic fibers and 5g of manganese oxide powder used as a particulate catalyst component were dispersed into 1L of water so as to prepare a slurry-like solid-liquid mixed aqueous solution.

200gofnaturalmordenite (IzukalitemanufacturedbyIzuka Co., Ltd., mean particle diameter: 0.5mm) was put into the slurry-like aqueous solution, they were then stirred evenly, the solid was then filtered out, the solid was further subjected to centrifugal dehydration by use of a filter cloth, and the surface water thereof was removed. Ventilation drying was then performed at 120°C for 12 hours, and a composite particulate article was made. The same honeycomb base material as in Example 5 was filled with 10g of this composite particulate article. Herein, air including 20ppm of ozone at 20° C was passed through at a rate of 3L/minute. When the ozone concentration at the outlet was measured, the concentration was smaller than 0.5ppm even after a lapse of 6 hours from the beginning of the passing of the air. The result was satisfactory.

### Industrial Applicability

The present invention can provide a composite particulate article that carries a fibrillated fiber and a heavy-metal-adsorbing fine particulate compound on a particulate article. Since the composite particulate article of the present invention can adsorb and remove free chlorine, THM, and heavy metals in a well-balanced manner, the composite particulate article is suitable for water clarification, and, since it can adsorb and remove noxious gases and malodorous gases in a well-balanced manner, it is suitable also for gas clarification.

## Claims

1. A composite particulate article that carries a fine particulate compound entangled in a fibrillated fiber on a particulate article.

2. The composite particulate article of Claim 1, wherein the fibrillated fiber is an acrylic fiber.

3. The composite particulate article of Claim 1 or Claim 2, wherein the fine particulate compound is smaller than 200µm in particle diameter.

4. The composite particulate article of any one of Claims 1 through 3, wherein the fine particulate compound is a compound having an ion-exchange function.

5. The composite particulate article of any one of Claims 1 through 4, wherein the fine particulate compound is a titanosilicate-based inorganic compound.

6. The composite particulate article of any one of Claims 1 through 5, wherein a carrying amount of the fine particulate compound is 0.1 to 30 wt% of the composite particulate article.

7. The composite particulate article of any one of Claims 1 through 6, wherein the particulate article is activated-carbon.

8. A composite particulate article preparing method comprising:
preparing a solid-liquid mixed solution while dispersing a fibrillated fiber and a fine particulate compound into a solvent;
mixing a particulate article with the solid-liquid mixed solution;
thereafter filtering out the solid;
removing surface water of the solid;
newly adding a dry particulate article to the solid; and
mixing and drying them.

9. A gas clarifying material comprising the composite particulate article of any one of Claims 1 through 7.

10. A gas clarifying device using the gas clarifying material of Claim 9.

11. A water clarifying material comprising the composite particulate article of any one of Claims 1 through 7.

12. A water clarifying device using the water clarifying material of Claim 11.

13. The water clarifying device of Claim 12, wherein a filling density of the composite particulate article is 0.40 to 0.60 g/mL.
